# EUROPEAN PATENT APPLICATION

(11) **EP 1 158 461 A1**
(43) Date of publication of application: **28.11.2001**
(21) Application number: 01112034.2
(22) Date of filing: 23.05.2001
(51) Int. Cl.: G06T 1/00

(54) **Method for forming, exhibiting and selling images**

(30) Priority: 26.05.2000 JP 2000155865; 26.05.2000 JP 2000155866
(71) Applicant: Ricoh Company, Tokyo 143-8555 (JP)
(72) Inventor: Okazaki. Hiromichi, Asaka-shi, Saitama 351-0014 (JP); Ikeda, Kiyomi, 12-2 Higashi-kibogaoka, Kanagawa 241-0826 (JP); Okabe, Shinji, Itabashi-ku, Tokyo 175-0082 (JP); Shijo Naoko, Kawasaki-shi, Kanagawa 212-0016 (JP)
(74) Representative: Schwabe - Sandmair - Marx

(57) **Abstract**

A reception server (5) receives a formation request for forming an image from a user terminal (1) through a network. A seller forms a digital image based on digital data of an original image, and registers the formed digital image in an art database (7). The seller informs a requester of the formation request about completion of forming the digital image. The reception server (5) reads out a corresponding digital image from the art database (7), and displays the read digital image on the user terminal (1), in response to a request from the user terminal (1). If a button "OK" is clicked on the user terminal (1), the reception server (5) executes a predetermined payment process. After it is confirmed that the requester has paid for the requested image, the reception server (5) permits the user terminal (1) to download the digital image. The requester then outputs the digital image, downloaded using the user terminal (1), using a printer.

## Description

The present invention relates to a system for receiving a request for creating (forming) an artistic digital image (digital art) through a communications line. The present invention relates also to a system for exhibiting and selling a reproduced image of a picture, painting, portrait, etc. through a communications line.

Conventionally, in the service industry for providing artistic items, a digital image is created, upon a request for creating an artistic digital image (digital art) from a customer, and supplied to the customer. In this service, if the customer requests for creating a reproduced image, the customer needs to bring its original image to seller's by him/herself. Then, the seller creates the requested reproduced image of the original image, using computer technologies, etc. After completion of the creating of the reproduced image, the seller prints the reproduced image, and sends the printed image to the customer by post.

However, in the above service, human operators need to receive the original image, provides the reproduced image to the customer, and carry out any other necessary tasks. Hence, the service has been done with low work efficiency, has not been a convenient service for the two.

Artistic works made or photographed by any persons are exhibited in some place like a gallery, etc. If a visitor of the gallery wants a particular artistic work, the visitor may request for creating a reproduced image of the artistic work, and purchase the reproduced image.

To exhibit and sell reproduced images of artistic works in an exhibition, various procedures and facilities are necessary, and hence it is a costly way to provide such images. Therefore, in fact, only those specialists in art are likely to exhibit or sell such reproduced images. In such circumstances, it is demanded that a system for any persons, other than the specialists, to exhibit and sell their artistic work should be realized.

The present invention has been made in consideration of the above. It is accordingly an object of the present invention to provide a method for forming an image, while carrying out a series of procedures for forming digital art.

Another object thereof is to provide a method for conveniently forming an image.

Still another object thereof is to provide a method for exhibiting and selling an image, in accordance with which each requester can exhibit and sell his/her own artistic work with ease.

In order to achieve the above objects, according to the first aspect of the present invention, an image formation method which is executed by a computer (3, 5), the method characterized by comprising the steps of:
receiving a formation request for forming a first digital image through a network from a requester, and storing the formation request;
forming the first digital image based on digital data of an original image and storing the formed first digital image, in accordance with an operation of a request receiver, in response to the formation request;
sending a message addressed to the requester and representing that the first digital image has completely been formed;
reading the first digital image and providing the requester with the read first digital image, in response to a request from the requester; and
executing a payment process for receiving payment for the provided first digital image from the requester.

According to this method, a seller receives a request for creating (forming) an image of digital image data through a network. Then, the seller can provide the requester with the created image. A series of processes for creating an image can be realized mostly through data communications. This enhances the convenience for the two, and improves the work efficiency.

The image formation method may further comprise the steps of:
providing the requester with the formed first digital image through a network, so that the requester can view the first digital image;
receiving a change request for making a change in the first digital image through a network, and storing the change request;
forming at least one second digital image, by making the change in the first digital image in response to the change request, and storing the at least one second digital image, in accordance with an operation of the request receiver, and providing the requester with image data representing the at least one second digital image, so that the requester checks the at least one digital image based on the provided image data;
providing the requester with the at least one second digital image, in response to a request from the requester and
executing a payment process for receiving payment for the provided at least one second digital image from the requester.

According to this method, the digital image is viewed by the requester, and a request for making a change in the digital image can be received from the requester. A series of processes for making a change in the digital image can be realized mostly through data communications. This enhances the convenience for the two, and improves the work efficiency.

The step of forming the at least one second digital image may include a step of making a change in the at least one second digital image, in response to a request from the requester.

The image formation method may further comprise the step of
executing a process for receiving payment for the change made in the first digital image and/or at least one second digital image, from the requester, in a case where total number of changes made in the first digital image and/or the at least one second digital image is equal to or larger than a predetermined number.

The image formation method may further comprise the step of
providing the requester with a message representing a charge for making the change in the first digital image and/or the at least one second digital image, and asking the requester whether to still make a change in the first digital image and/or at least one second digital image, through a network.

The digital data of the original image may be retrieved by performing at least one of the step of:
reading the original image sent from the requester, using an image reader, and
receiving the digital data of the original image from a terminal (1) of the requester through a network.

The step of providing the requester with the formed first digital image may include at least one of the steps of:
providing the terminal (1) of the requester with the first digital image to be displayed, through a network; and
printing the first digital image, and providing the requester with the printed digital image.

The first digital image and the at least one second digital image may be sent to the requester, thereby the requester selects one of the first digital image and the at least one second digital image.

Any one of the first digital image and the at least one second digital image which has not been selected by the requester may be deleted.

According to this method, the effective use of the memory areas can be achieved, in any systems using images which are large in data size.

In order to achieve the above objects, according to the second aspect of the present invention, there is provided a method for exhibiting and selling an image, which is executed by a computer (13, 15), the method characterized by comprising the steps of:
receiving a formation request for forming a digital image through a network, and storing the received formation request;
forming the digital image based on digital data of an original image, in accordance with an operation of a request receiver, in response to the formation request, and storing the digital image;
providing the stored digital image, in response to a request for the formed digital image, which is to be displayed;
receiving a purchase request for purchasing a product related to the digital image from a purchase requester, and storing the purchase request;
executing a process for forming the product to be provided to the purchase requester, using the digital image, in accordance with an operation of a request receiver, in response to the purchase request; and
executing a payment process for receiving payment for the formed product from the purchase requester.

According to this method, a digital image is created upon reception of a request for creating an image is received through a network. Then, the crated digital image is exhibited and sold on a network. Hence, the image of the requester can easily be shown to any third party. If the third party likes the image, he/she can purchase the product related to the image.

The method may further comprise:
the step of receiving the purchase request for purchasing the product includes a step of receiving information representing the digital image and the product requested by the purchase requester; and
the process for forming the product includes a step of printing the digital image in such a way that the digital image corresponds to the product requested by the purchase requester, in response to the purchase request.

In order to achieve the above objects, according to the third aspect of the present invention, there is provided a server (5) prepared for the image formation system connectable to a network and a database (7), and characterized in that the server (5):
receives a formation request for forming a digital image from a requester through a network, and registers the formation request in the database;
provides the requester with the digital image which is formed based on digital data of an original image, in response to a request for the digital image; and
executes a payment process for receiving payment for the provided digital image, from the requester.

The server may:
read the digital image from the database (7) in response to a request from a terminal (1) of the requester, and provide the terminal with a display page for displaying the digital image;
receive a change request for making a change in the digital image displayed in the display page, and register the change request in the database (7); and
provide the requester with the digital image in which the change has been made based on the change request.

In order to achieve the above objects, according to the fourth aspect of the present invention, there is provided a server prepared for an image exhibition/sales system connectable to a network and a first and second databases (17, 19), and characterized in that the server:
receives a formation request for forming a digital image through a network, and registers the received formation request in the first database (17);
sends the digital image which is formed based on digital data of an original image in response to the formation request and registered in the database (19), in response to a request for the digital image which is to be displayed;
receives a purchase request, from a purchase requester, for purchasing a product related to the digital image, and registers the purchase request in the second database (19); and
executes a payment process for receiving payment for the product from the purchase requester.

The server may receive information representing the digital image and the product requested by the requester, and register the received information in the second database (19), while receiving the purchase request for purchasing the product.

In order to achieve the above objects, according to the fifth aspect of the present invention, there is provided a work terminal (3) prepared for the image formation system which is connectable to a network and a database (7), and characterized in that the work terminal:
forms a digital image based on digital data of an original image, in accordance with an operation of a request receiver, in response to a formation request, for forming the digital image, which is registered in the database (7); and
registers the formed digital image in the database (7).

The work terminal may:
make a change in the digital image, in accordance with an operation of the request receiver, in response to a change request registered in the database (7); and
register the digital image in which the change is made in the database.

The digital data may be obtained by performing at least one of the steps of:
reading the original image sent from the requester, using an image reader; and
reading digital data of the original image which is registered in the database.

In order to achieve the above objects, according to the sixth aspect of the present invention, there is provided a work terminal (13) prepared for image exhibition/sales system connectable to a network and a first and second databases (17, 19), and characterized in that the work terminal:
forms a digital image based on digital data of an original image, in accordance with an operation of a request receiver, in response to a formation request for forming the digital image which request is registered in the first database (17), and registers the formed digital image in the second database (19); and
executes a process for forming a product to be supplied to a purchase requester, in such a way that the product corresponds to the digital image, in accordance with an operation of the request receiver, in response to a purchase request for purchasing the product related to the digital image registered in the second database (19).

The purchase request for purchasing the product formed to correspond to the digital image registered in the second database (19) may represent the digital image and product requested by the purchase requester; and
the work terminal may print the requested digital image during the process for forming the product, in response to the purchase request, in such a way that the digital image corresponds to the requested product.

In order to achieve the above objects, according to the seventh aspect of the present invention, there is provided a computer readable recording medium which records a program for controlling a computer to execute the steps of:
receiving a formation request for forming a digital image from a requester through a network, and registering the received formation request in a database (7);
providing the requester with the digital image which is formed based on digital data of an original image in response to the formation request; and
executing a process for receiving payment for the provided digital image from the requester.

In order to achieve the above objects, according to the eight aspect of the present invention, there is provided a computer readable recording medium which records a program for controlling a computer to execute the steps of:
receiving a formation request for forming a digital image through a network, and registering the formation request in a first database (17);
providing, in response to a request from a purchaser requester, a digital image which is to be displayed and which is formed based on digital data of an original image in response to the formation request and registered in a second database (19);
receiving a purchase request for purchasing a product related to the formed digital image from the purchase requester, and registering the received purchase request in the second database (19); and
executing a process for receiving payment for the product from the purchase requester.

In order to achieve the above objects, according to the ninth aspect of the present invention, there is provided a computer data signal which is embodied in a carrier wave, the signal characterized by comprising:
a segment for receiving a formation request for forming a digital image from a requester through a network, and registering the formation request in a database (7);
a segment for providing the requester with the digital image which is formed based on digital data of an original image, in response to the formation request; and
a segment for executing a process for receiving payment for the provided digital image from the requester.

In order to achieve the above objects, according to the tenth aspect of the present invention, there is provided a computer data signal which is embodied in a carrier wave, the signal characterized by comprising:
a segment for receiving a formation request for forming a digital image through a network, and registering the formation request in a first database (17);
a segment for displaying, in response to a request, the digital image which is formed based on digital data of an original image in response to the formation request and registered in a second database (19);
a segment for receiving a purchase request for purchasing a product related to the digital image from a purchase requester, and registering the purchase request in the second database (19); and
a segment for executing a process for receiving payment for the product from the purchase requester.

These objects and other objects and advantages of the present invention will become more apparent upon reading of the following detailed description and the accompanying drawings in which:
FIG. 1 is a diagram showing the structure of an image formation system according to the first embodiment of the present invention;
FIG. 2 is a diagram showing an example of a Web (World Wide Web) page for displaying a menu showing a list of possible actions;
FIG. 3 is a diagram showing an example of a display screen for inputting request administration information;
FIG. 4 is a diagram showing an example of a view page for displaying reproduced image data;
FIG. 5 is a diagram showing an example of a display screen for making a change in reproduced image;
FIG. 6 is a flowchart for explaining the flow of a process to be carried out by the image formation system of FIG. 1;
FIG. 7 is a flowchart for explaining a process for making a change in reproduced image;
FIG. 8 is a flowchart for explaining the flow of a process to be carried out by the image formation system of FIG. 1;
FIG. 9 is a diagram showing the systematic structure of an image exhibition/sales system, according to the second embodiment of the present invention;
FIG. 10 is a diagram showing an example of a Web page for displaying a menu showing a list of possible actions for creating reproduced image;
FIG. 11 is a diagram showing an example of a view page for displaying reproduced image data;
FIG. 12 is a diagram showing an example of a Web page for exhibiting and selling reproduced images and product items related thereto;
FIG. 13 is a flowchart for explaining a process for registering reproduced image
FIG. 14 is a flowchart for explaining a process for making a change in reproduced image;
FIG. 15 is a flowchart for explaining a process for selling reproduced image; and
FIG. 16 is a diagram showing an example of a display page for displaying a plurality of reproduced images each with a change made thereinside and comments in association with the change made in each of the reproduced images.

An image formation system according to the first embodiment of the present invention will now be described. This system is prepared for sellers, creating reproduced images using an image processing technique, etc. with a computer and selling the reproduced images. Using the image formation system of this invention, the sellers are to: create a reproduced image upon reception of a request for creating (forming) a reproduced image from a customer; provide the requester with the created image; and receive the money for the created image.

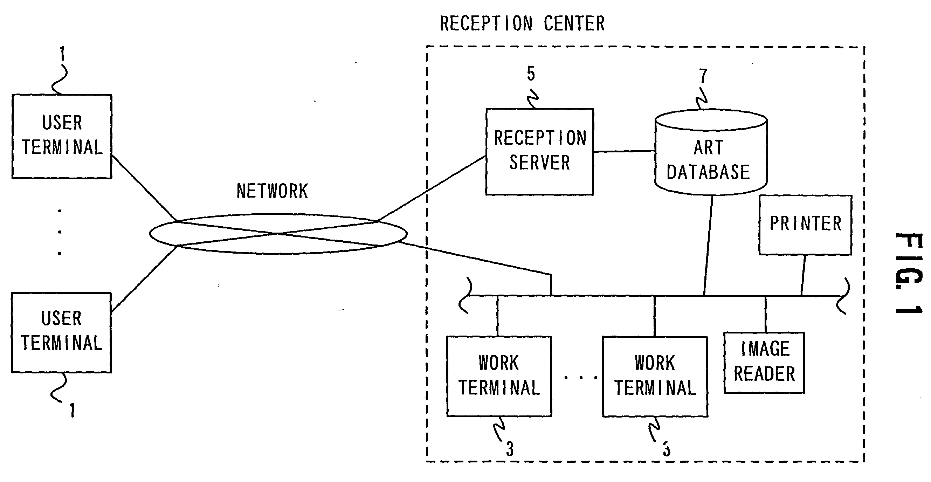

Illustrated in FIG. 1 is the systematic structure of the image formation system according to the first embodiment of the present invention. As illustrated in FIG. 1, this image formation system comprises one or more user terminals 1 and a reception center, which includes one or more work terminals 3, a reception server 5, and an art database 7. The one or more user terminals 1, the one or more work terminals 3, and the reception server 5 are connected to a network, such as the Internet, etc.

The one or more user terminals 1 are prepared for users (customers) to make a request for creating a reproduced image. Each user terminal 1 includes, for example, a computer including a controller, a storage section, a display section, an input section, a communications section, and the like. The controller included in each user terminal 1 executes a program stored in the storage section, so as to realize each of the following functions, as will be described below.

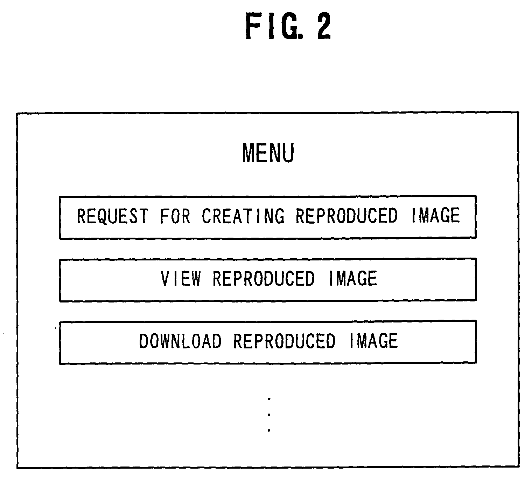

The user terminal 1 further includes a Web browser, and accesses a Web site of the reception server 5 through the Internet, etc., in accordance with operations of the user, and displays a Web page sent from the reception server 5. The Web page sent from the reception server 5 includes a menu showing a list of possible actions, such as "Request For Creating Reproduced Image", "View Reproduced Image", and the like, as shown in FIG. 2. If the user selects a particular action from the menu, the reception server 5 provides the user terminal 1 with a processing screen page for accomplishing the request for creating a reproduced image or for displaying a reproduced image.

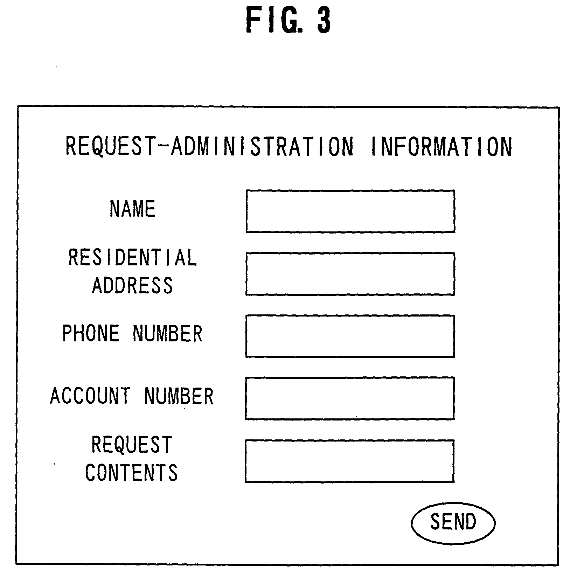

For example, if the action of "Request for Creating Reproduced Image" is selected by the user, the user terminal 1 informs the reception server 5 about the user's selection, and receives predetermined information representing an input display screen (a display screen for inputting "request administration information"). This display screen has input areas for inputting the request administration information, including user name, residential address, phone number, account number, request contents, and the like, as illustrated in FIG. 3.

The user terminal 1 sends, to the reception server 5, the request administration information which includes the user name, residential address, phone number, account number at a financial institution, and request contents, etc. It is an arbitrary method with which the user sends an original image (including a picture, positive film, etc.), which is the original form of an image to be reproduced, or its image data to the reception center. For example, the user terminal 1 may affix digital data of the original image to the request administration information, and sends the request administration information with the digital data affixed thereto to the reception server 5. Otherwise, the user may send the original image to the reception center by post, or bring the original image by him/herself.

The user terminal 1 has an e-mail function, and acquires and displays a message, representing completion of creating a requested reproduced image, or a message representing completion of making a change in the reproduced image. Now, the requester is aware of the completion of creating the reproduced image or making a change in the image, based on the displayed message. After this, the requester accesses the Web site of the reception server through the user terminal 1, so as to view the created image or the image with some change.

Upon selection of "Display Reproduced Image" from the menu included in the Web page sent from the reception server, the user terminal 1 informs the reception server 5 of the user's selection. Subsequently, the user terminal 1 receives a display screen page including reproduced image data of the reproduced image requested by the requester from the reception server 5, and displays the received screen page.

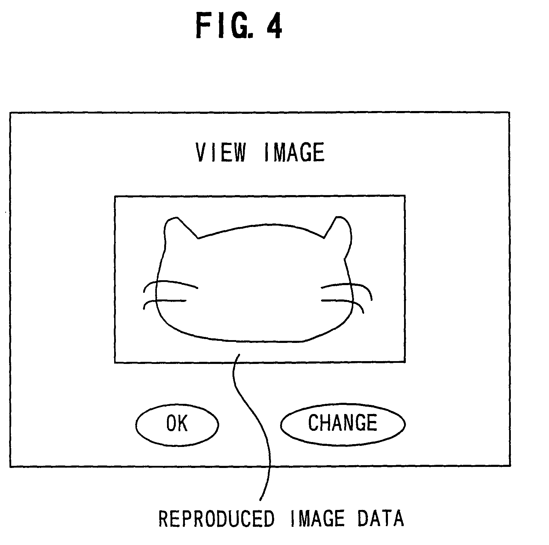

In the displayed screen page, there are included buttons "OK" and "Change", as shown in FIG. 4. In the case where the requester is satisfied with the reproduced image displayed on the user terminal 1, he/she clicks on "OK". On the contrary, in the case where the requester wants to make a change in the displayed image, he/she clicks on "Change". In the case where the changes have already been made for a few times before, the entire images including the firstly-displayed reproduced image and partially-changed image(s) are displayed. Hence, of the entire images, the requester can select one displayed image as a target image to be purchased or for further changes.

The image formation system of this embodiment includes a function for showing the image in the form of a resultant image, so that the requester ascertains the coloring of the displayed image at the time the reproduced image is displayed on the display section.

For example, the displayed image can actually be output as a test image from a printer of the requester, so that the requester can check the coloring of the printed image.

In addition, there can be displayed color codes for identifying colors, respectively, for forming the displayed reproduced image. If the user, in advance, has a set of sample colors (e.g., which are shown in the form of pairs of printed colors and their corresponding color code) which are printed out by his/her printer, the user compares each color included in the displayed reproduced image with each corresponding one of the sample colors. Then, the user can check and make sure the coloring of the displayed reproduced image, to be printed out from the printer.

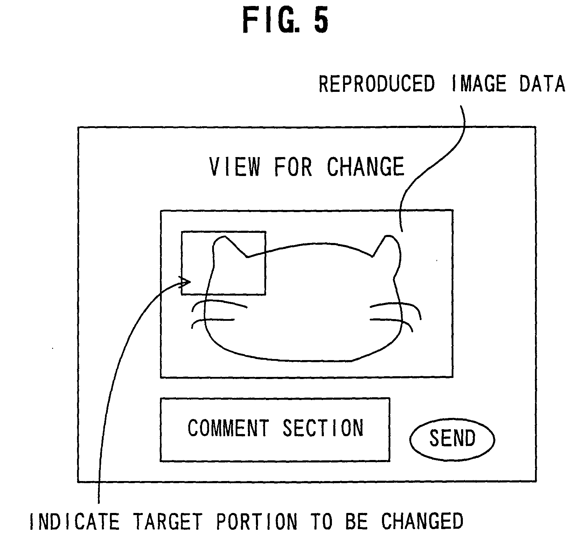

If the button "Change" included in the displayed screen is selected and clicked by the user, the user terminal 1 informs the reception server 5 about the fact, and displays a page, for making a change in reproduced image data, which is sent from the receptions server 5. As shown in FIG. 5, the page for making a change in reproduced image data receives an instruction from the user, for changing a particular portion in the reproduced image data using a mouse, etc. Further, the page receives change information regarding a change to be made in the image data, as a comment. The user terminal 1 sends, to the reception server 5, change-request information which includes position information of the portion to be changed (or the reproduced image data including a specified portion to be changed) and the input comment.

The request for changing the coloring can include an instruction for changing a particular portion in the reproduced image and change information (e.g., "Use color of color code "xxxx" for the cat's ear") to be input in the comment section. Upon clicking of a button (not illustrated) for color change, a color palette including a plurality of colors can be displayed, and the requester can select a desired color for a desired portion in the reproduced image.

Before receiving the input change-request information, the reception server 5 may verify the requester, based on an input password, finger print, etc., so as to make sure whether the requester is a proper user. When to verify the requester, the user terminal 1 receives input data for verification, and sends the received data to the reception server 5. Further, the reception server 5 verifies the received data based on the data for verification which is registered in advance, and confirms the requester as a proper user only if the received data is satisfactorily verified.

If the requester clicks on the button "OK", the user terminal 1 informs the reception server 5 about that. Then, the user terminal' 1 display a payment page sent from the reception server 5. In the payment page, the requester inputs his/her account number, code number for the account, amount payable, etc. Note that the verification of the requester based on the input password, fingerprint, etc. may be performed at this time.

After the payment is successfully made, the user terminal 1 downloads reproduced image data from the reception server 5, in accordance with the operation of the requester, and prints out the downloaded image data through the printer.

Each of the work terminals 3 is prepared for each seller (including any workers working for creating reproduced images), to create and make a change in a reproduced image. Each work terminal 3 includes a computer including a controller, a storage section, a display section, an input section, a communications section, and the like. The controller included in each work terminal 3 executes a program(s) stored in the storage section, thereby to realize each function, as will be described below.

The work terminal 3 further includes application software for making a change in image data and converting the image data into a desired form, for example. The work terminal 3 reads out the original image data registered in advance in the art database 7, in accordance with an operation of a seller. The work terminal 3 adjusts and/or performs converting of color data, size data, etc. of the original image data, thereby to create reproduced image data conforming to the coloring and artistic expression of the original image. The reproduced image data may be created by converting the original image data into image data, in the style of illustration, oil painting, watercolor painting, etc. for example. In the case where the original image is kept in the reception center, the work terminal 3 creates reproduced image data by adjusting and converting the original image data, likewise the above, which is obtained by reading an original image using an image reader, such as a scanner, digital camera, etc.

For those change-requested reproduced image data which are registered in the art database 7, the work terminal 3 makes a change in corresponding reproduced image data in accordance with the operations of the seller, and newly registers the image data, in which the change is made, in the art database 7.

The work terminal 3 has an e-mail function, and sends, to a predetermined e-mail server, a message, representing the completion of the creating or making a change in the reproduced image data, or a message, representing that the requester has certainly paid the amount of money charged for a given service.

The reception server 5 includes a WWW server, etc. including a controller, a memory, a communications section, and the like. The controller included in the reception server executes a program stored in the memory, so as to carry out a process for receiving a request for creating a reproduced image, which request is sent from user terminal 1.

The reception server 5 provides the user terminal 1 with the Web page (refer to FIG. 2) including the menu, in response to a request therefrom, and carries out a process in accordance with an action selected by the requester.

If the reception server 5 has received a request for creating a reproduced image, it provides the user terminal 1 with the display screen (refer to FIG. 3) for inputting a request, receives an input request, and stores the received request in the art database 7.

The reception server 5 reads out reproduced image data from the art database 7, in response to a request for viewing the reproduced image, and sends the read image data to the user terminal 1. The reception server 5 receives, for example, a message representing that a request for making a change in the reproduced image data is input in the page for viewing the reproduced image (i.e., if the button "Change" is selected and pressed by the user). In such a case, the reception server 5 provides the user terminal 1 with a page, for making a change in the reproduced image data and including a predetermined comment section for inputting a comment, and for indicating an arbitrary portion in the reproduced image. The reception server 5 receives, from the user terminal 1, change-request information, which includes an input comment and position information (including reproduced image data including a specified portion) representing a position of the to-be-changed portion in the reproduced image, and registers the received data in the art database 7.

If the reception server 5 has received the request administration information or the request for making a change in the reproduced image data, the reception server 5 may send a message for informing the seller about the reception of such information, to the work terminal 3.

For example, the reception server 5 may create status information for managing the status of each request administration information sent from the user terminal 1, and manage the created status information in association with each request. In this case, the reception server 5 can affix the status information, such as "New Entry", "Completion of Creating Reproduced Image", " Request for Change", "Completion of Making Change in Reproduced Image", or the like, to the request administration information or reproduced image data. This can be done at various timings of receiving the request administration information from the user terminal 1 or uploading the reproduced image data to the art database 7 from the work terminal 3, or at any other timings. Then, the reception server 5 can manage the progress of each work requested by the requester. Having performed this, the seller can be aware of the contexts of each work done so far.

If information representing that the user has settled the reproduced image is input in the view page displaying the reproduced image (i.e., the button "OK" has been selected and pressed by the user), the reception server 5 receives such information. Then, the reception server 5 provides the user terminal 1 with a payment page for inputting information regarding the requester's account number, code number, amount of money charged for a given service. At this time, the user verification may further be performed. Based on the information input in the payment page, the reception server 5 sends a request for transferring the money from the requester's account to the seller's account, to a predetermined financial institution.

After it is confirmed that the money has been transferred, and a message representing that the confirmation of the money transferring is made is sent from the seller to the requester, the reception server 5 permits the requester to download the reproduced image data. Otherwise, the seller may attach the reproduced image data downloaded from the art database 7 to the message representing the confirmation, and send the messaged with the reproduced image data attached thereto, to the requester. The reception server 5 may permit the requester to download the reproduced image data, upon confirmation of the transferring of the money from the requester's account to a predetermined account.

Because the reproduced image data before changed remains in the art database 7 as is, the requester can select the best image he/she likes among any other reproduced images until one reproduced image is settled by the requester. For example, if changes have been made in a reproduced image twice, image data representing three reproduced images, including the firstly-created reproduced image, once-changed reproduced image, and twice-changed reproduced image, are stored in the art database 7. When the requester finally selects one reproduced image, the rest of the reproduced images are deleted. This achieves the effective use of the memory areas for storing the image data which is large in data size. The reproduced image data may be deleted by the seller with using the work terminal 3 or automatically by the reception server 5.

The reproduced image data may be changed for free for a predetermined number of times, and further changes may be charged to the requester. For example, the reception server 5 stores, as change-frequency information, the number of times the changes have been made for each reproduced image. Every time the button "Change" is pressed in the display screen page of the user terminal 1, the number may be counted up, for example. In the case where the reception server 5 receives the change-request for the number of times which is larger than a predetermined number, the reception server 5 may inform the seller of it, for example. Upon this, the seller may inform the requester about the estimated additional cost for further change in the form of an email, using the work terminal 3, so that the requester can determine whether to further make a change-request based on the estimated cost. Additionally, the reception server 5 may automatically calculate the additional cost for further change, and send the estimated cost to the user terminal 1, so that the requester can determine whether to further make a change in the reproduced image.

The art database 7 stores request administration information, image data of an original image, reproduced image data of the original image, in association with each request for creating a reproduced image.

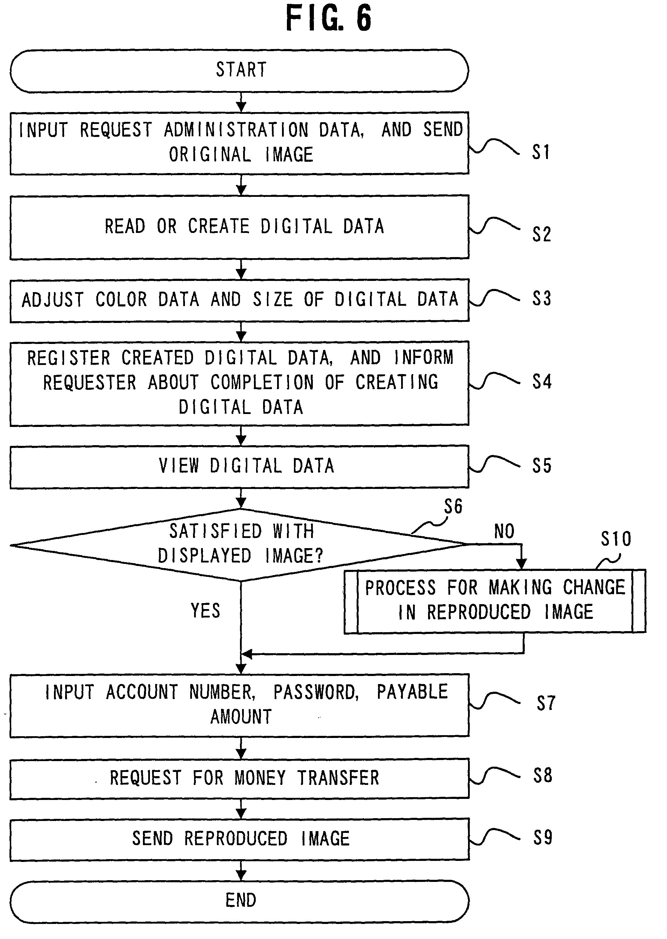

The flow of a process carried out by the image formation system according to the first embodiment will now specifically be explained with reference to the flowchart of FIG. 6.

Let is be assumed that a requester A is to make a request for creating a reproduced image of a picture possessed by him/herself. The requester A accesses the reception server 5 of the reception center from the user terminal 1 through the Internet, and inputs request administration information (including the requester's name, residential address, phone number, etc.) which is necessary for making a request for creating a reproduced image. Thus input data is sent from the user terminal 1 to the reception server 5, and then registered in the art database 7.

The requester 1 sends an original picture of an image to be reproduced to the reception center by post. Otherwise, the requester may send digital data of a picture to the reception server 5 of the reception center through the Internet (Step S1).

In the case where the seller receives the original picture from the requester A by post, the seller controls an image reader, such as a scanner, digital camera, etc. connected to the work terminal 3, so as to create digital data of the original picture (Step S2). In the case where the digital data of the original picture is received through the Internet, the seller reads out data of the original picture from the art database 7 using the work terminal 3 (Step S2).

The seller adjusts and converts color data and size data of the digital data, which is obtained in the step S2, into a desired data form. In other words, the seller creates reproduced image data corresponding to the original image in terms of the coloring and artistic expression thereof, and converts the original image data into a desired data form, so as to make reproduced image data, in the style of, for example, illustration, oil painting, watercolor painting, etc. (Step S3). During this time, existing application software for color matching, or software for making a change in reproduced image or converting image data into a desired data form may be used in the work terminal 3.

Then, the seller registers the reproduced image data which is created in the step S3 in the art database 7, using the work terminal 3, and sends a message for informing the requester A about the completion of the creating of the reproduced image, to a predetermined e-mail server (Step S4).

The requester A receives the message for informing the requester A about the completion of the creating of the reproduced image, using the user terminal 1. The requester A accesses the reception server 5 using the user terminal 1, and restore (display) the reproduced image data which is registered in the art database 7 (Step S5). At this time, the requester A can ascertain how the displayed reproduced image data would be printed out, in terms of its coloring and the like, using a predetermined method. For example, using a technique, wherein color codes for identifying respective colors for forming the displayed image are displayed, the requester A can compare the displayed colors with the sample colors which are printed out in advance, so as to ascertain the coloring of the reproduced image in a completed form.

If the requester A specifies that he/she is satisfied with the displayed reproduced image, by clicking on the button "OK" shown in the displayed screen of the user terminal 1, the reception server 5 verifies the requester A whether the requester A is a proper user. After this, the reception server 5 provides the user terminal 1 with a payment page for paying the charges for the given service. Thereafter the user terminal 1 can display the payment page on the display section. The requester A inputs his/her account number, code number, payable amount, and the like in the payment page (Steps S6 and S7).

The reception server 5 receives the input data from the user terminal 1, and sends a request to a predetermined financial institution for transferring the indicated amount of money from the requester's account to the seller's account (Step S8). This accomplishes the transferring of the money from the requester's account to the seller's account.

After it is confirmed that the money has completely been transferred to the seller's account, the seller sends a message addressed to the requester A to a predetermined e-mail server, to inform the requester A of the confirmation. The reception server 5 permits the requester A to download the reproduced image data. Upon this, the requester A accesses the reception server 5 using the user terminal 1, and downloads the reproduced image data. The reception server 5 may attach the reproduced image data to the message, representing that the charged money has successfully been transferred, and send the data with the message attached thereto to the requester. The requester A then outputs the reproduced image data received from the reception server 5, from the printer (Step S9).

In the step S6, if the requester A inputs a request for making a change in the reproduced image, by clicking on the button "Change" in the display screen page of the user terminal 1, for example, the flow advances to a process for making a change in the reproduced image, as will more specifically be described later (Step S10).

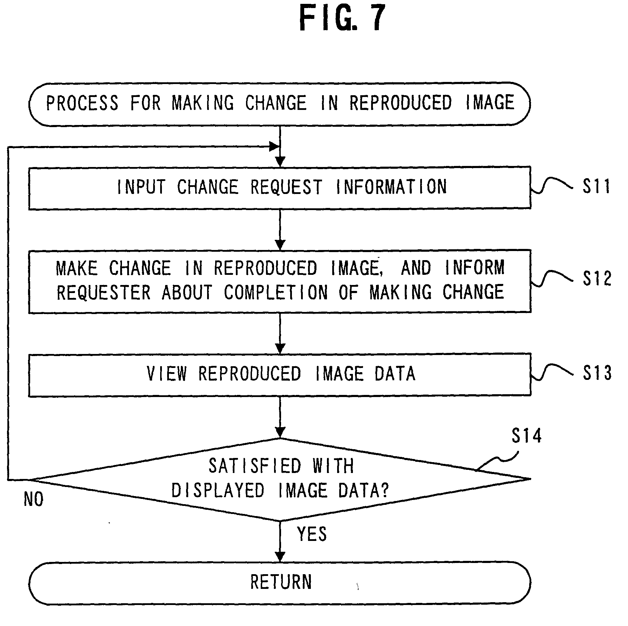

FIG. 7 shows the process for making a change in the reproduced image. In this process, the user terminal 1 displays a page for making a change in the reproduced image data. In this page, the requester A inputs change-request information, including a target portion to be changed in the reproduced image, the change contents, etc. Then, the user terminal 1 sends the input information to the reception server 5. The reception server 5 receives the change-request information, and registers the received information in the art database 7 (Step S11).

The seller makes a change in the reproduced image data, based on the change-request information registered in the art database 7, using the work terminal 3. Upon completion of the change, the seller registers the reproduced image data after the change is made, and sends a message for informing the requester A of the completion of the change to a predetermined e-mail server (Step S12).

Then, the requester A receives the message representing the completion of the data change from the predetermined e-mail server, using the user terminal 1, accesses the reception server 5, and displays the reproduced image data registered in the art database 7 (Step S13). At this time, not just the currently-changed reproduced image data, but the firstly-created reproduced image data and any other reproduced image data with a change are entirely displayed.

If the requester A shows his/her satisfaction with a particular reproduced image, by clicking on the button "OK", after selecting the reproduced image displayed on the user terminal 1 (Step S14), the flow returns to the main flow of the process for making a change in the reproduced image. In the main flow of the process, the requester A inputs any information necessary for paying the charges. The input data is sent to the reception server 5. The reception server 5 sends a request for money transfer, to a financial institution. After it is confirmed that the money is successfully transferred to the seller's account, the requester A is informed about it and permitted to download the reproduced image data (Steps S7 to S9).

In the step S14, if a request for further making a change in the reproduced image is made, the flow advances to the step S11. The procedures of the steps S11 to S14 are repeated, until the requester A clicks on the button "OK".

The changes may be made in the reproduced image data for free for a predetermined number of times. In this case, the number of times the changes have been made is summed up, and stored as change-frequency information. If the summed number is larger than a predetermined number of times, the seller informs the requester about the estimated cost for the further change. A step for asking the requester whether to wish to make a change in the reproduced image may be inserted after the step S11 and before the step S12. At this time, if the summed number is larger than a predetermined number, the reception server 5 may obtain the estimated cost for the further change, automatically in accordance with a predetermined equation, and may inform the requester A about the estimated cost.

Accordingly, the seller receives the request for creating the reproduced image through a network, such as the Internet, etc., and provides the requester with the digital data of the reproduced image through a network. In addition, the seller receives the request for making a change in the created reproduced image through a network. This, generally, enables data communications between the requester and seller. Hence it is quite convenient for the two, and thus realizing the image formation system which can execute high-speed processing with high efficiency.

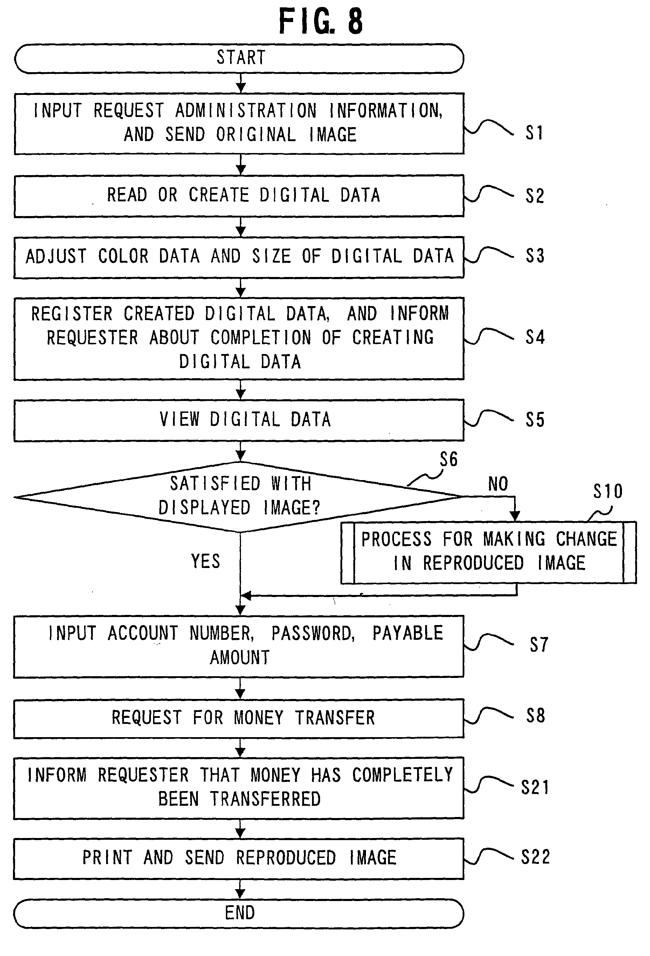

In the above explanations, the data of the reproduced image which is received by the requester from the reception center is output using the printer, thereby to obtain the reproduced image. However, the method for obtaining such a reproduced image is not limited to the above. For example, there may be employed a process, wherein the reproduced image data which is printed out by the reception center may be sent to the requester by post. This process which is carried out by the image formation system is shown in the form of a flowchart in FIG. 8.

As shown in FIG. 8, the procedures steps S1 to S8 are the same as those shown in FIG. 6. The money transfer is made in the step S8. After it is confirmed that the money is successfully transferred to the seller's account, the message for informing the requester about the completion of the money transfer is sent to a predetermined e-mail server (Step S21). The reproduced image data is printed out on a given paper using a predetermined printing technique, in accordance with an instruction of the requester (Step S22). The paper on which the reproduced image data is printed may a post card, drawing paper, or any other various kinds of paper. For example, the printing may be performed on a canvas sheet for oil painting. Painting may be performed in oil over the reproduced image which is printed out on a canvas sheet, thereby to provide the requester with the reproduced image in oils.

Before making a request for creating the reproduced image for the first time, the requester may be registered in advance. In this case, the following request(s) for creating the reproduced image can easily be accomplished only by inputting some information, like the requester's name, password, etc.

The network, to which the user terminal 1, work terminal 3, and reception server 5 are connected, is not limited to the Internet, and any other various types of networks can be adapted therefor.

The payment method is not limited to the money transfer, and is arbitrary. For example, the money for the provided service(s) may be electronically transferred using debit card, or in the form of electronic money (E-money). Additionally, the payable money may be transferred from an ATM terminal or the like to the seller's account.

The digital data which is created in the image formation system of this embodiment is not limited to data of the reproduced image data, and may represent various artistic digital images which can be created based on a request from the requester.

As explained above, according to the present invention, the seller of the digital image receives a request for creating a reproduced image through a network, and provides the requester with a created image. In the series of procedures for creating the image, data communications can generally be made between the requester and seller. This enhances the convenient for the two, and improves the efficiency of the processing.

An image exhibition/sales system according to the second embodiment of the present invention will now be explained with reference to the accompanying drawings. This system accepts a request for creating a reproduced image, such as painting, picture, etc., from customers, creates a reproduced image in accordance with the request, exhibits and sells the created reproduced image on a network.

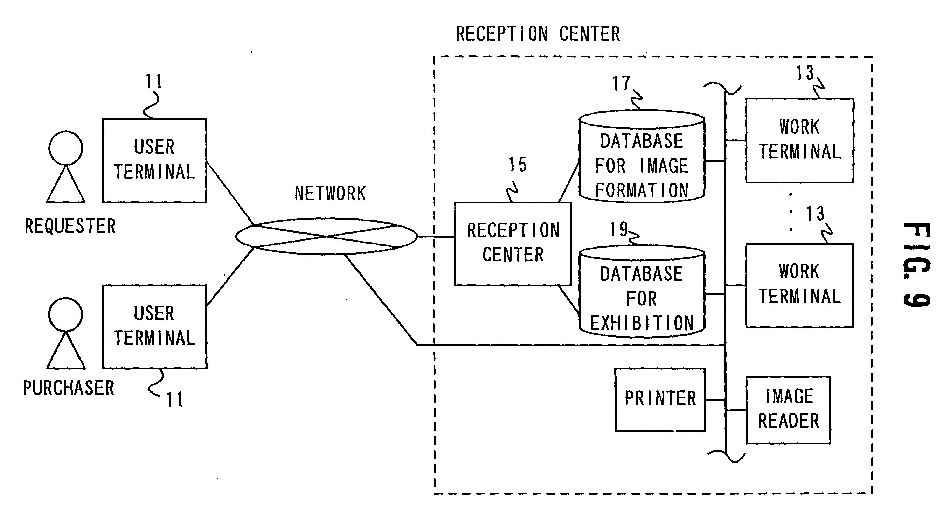

FIG. 9 shows the structure of the image exhibition/sales system according to the second embodiment of the present invention. As shown in FIG. 9, this system comprises one or more user terminals 11 and a reception center, which includes one or more work terminals 13, a reception server 15, a database 17 for image formation, and a database 19 for exhibition. Each of the one or more user terminals 11, each of the one or more work terminals 13, and the reception server 15 are connected to a network, such as the Internet.

Each user terminal 11 is prepared for a user (a requester) to make a request for creating a reproduced image and for another user (a purchaser) to purchase the reproduced image which is exhibited on the network. The user terminal 11 includes a computer, including a controller, a memory, a display section, an input device, a communications section and the like. The controller executes a program stored in the memory, thereby to realize the following functions, as will be explained below.

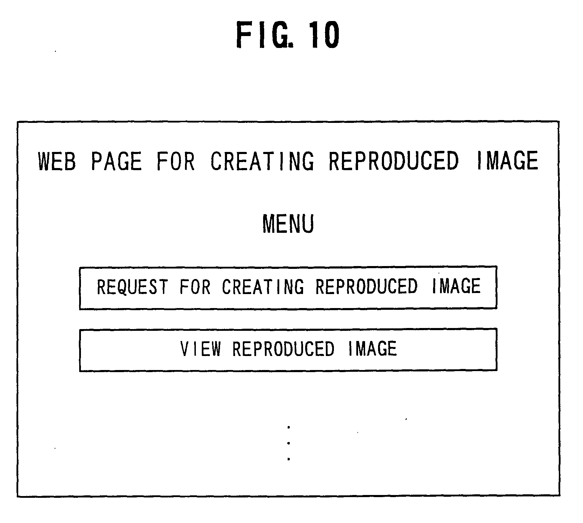

The user terminal 11 further includes a Web browser, and accesses a Web page (a Web page for creating a reproduced image) through which the reception server 15 accepts a request for creating a reproduced image and for exhibiting the created reproduced image, in accordance with an operation of the requester. A Web site, sent in response to the above request from the reception server 15, includes a menu showing a list of actions i "Request for Creating Reproduced Image", "Display Reproduced Image", and the like for creating a reproduced image, as illustrated in FIG. 10.

For example, if the requester selects the action of "Request for Creating Reproduced Image" from the menu, the user terminal 11 receives request administration information input by the requester, and sends the received data to the reception server 15. The request administration information includes the requester's name, residential address, phone number, account number, request contents, etc.

It is an arbitrary method, with which the requester sends an original image (including a picture, positive film, etc.) of an image to be reproduced or its image data to the reception center. For example, the user terminal 11 may attach the digital data of the original image to the request administration information, and send the request administration information with the digital data attached thereto to the reception server 15. The requester may send the original image to the reception center by post, or bring it thereby by him/herself.

The user terminal 11 obtains a message, for informing the requester about completion of creating of the reproduced image data or about completion of making a change in the reproduced image, from an e-mail server, and displays the obtained message on the display section thereof. The requester is now aware of the fact that the creation or change in the reproduced image is completed, upon reception of this message. To view the created reproduced image or the reproduced image with a change, the requester accesses, from the user terminal, the Web page for creating the reproduced image sent from the reception server 15.

If the requester selects the action of "Display Reproduced Image" from the menu included in the sent Web site, the user terminal 11 informs the reception server 15 of that. Subsequently, the user terminal 11 receives a display screen page including the reproduced image data requested by the requester, from the reception server 15, and displays the received page on the display section thereof.

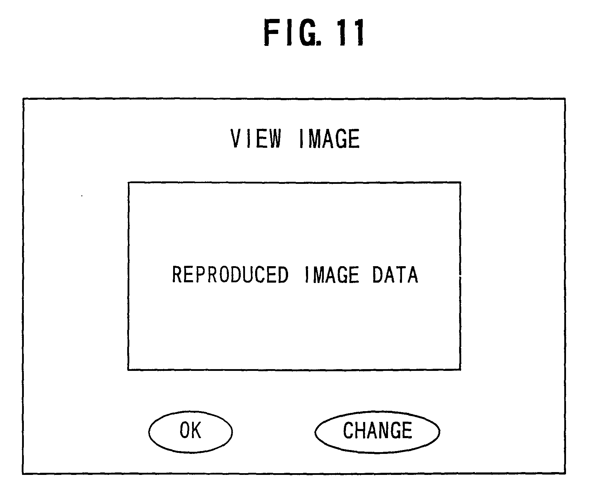

As shown in FIG. 11, the display screen page includes buttons "OK" and "Change". If the requester is satisfied with the displayed reproduced image, he/she clicks on the button "OK". On the contrary, if the requester wants to make a change in the displayed image, he/she clicks on the button "Change". In the case where changes have already been made in the reproduced image for a few times, the entire images including the firstly-displayed reproduced image and partially-changed image(s) are displayed. The requester selects one reproduced image as a target image to be purchased or changed, among the entire images.

This image exhibition/sales system of this invention may include a function for showing the image in the form of a printed resultant image, so that the requester ascertains the coloring of the displayed image at the time the reproduced image is displayed on the display section.

For example, the reproduced image may in fact be output by a printer of the requester, so that the requester can check and view the coloring of the printed image.

In addition, color codes for identifying respective colors for forming the displayed reproduced image can be displayed. If the user, in advance, has a set of sample colors (e.g., to each of which a corresponding color code is affixed), the user compares each color included in the displayed reproduced image with each corresponding one of the sample colors. Then, the user can check and make sure the coloring of the displayed reproduced image, as one to be printed out from the printer.

If the requester clicks on the button "Change" in the display screen page, the user terminal 11 informs the reception server 15 of the clicking of "Change". Further, the user terminal 11 displays a page, for making a change in the reproduced image, which is sent from the reception server 15 on the display section thereof. In the "change" view, the requester inputs an instruction for making a change in a portion of the reproduced image data, using an input device, such as a mouse, etc., and inputs a comment representing change information in the comment section. The user terminal 11 sends, to the reception server 15, change-request information, including the input comment and position information (or reproduced image data including a specified portion to be changed) specifying a position of the portion to be changed. The requester can also input a request for making a change in the coloring of the reproduced image, at the same time when to send the instruction for making a change in the portion. If the requester clicks on a button "Change Color" (not illustrated), a color palette having a plurality of colors appears in the page. Then, the requester can select a desired color for a desired portion of the reproduced image, from the color palette. Before receiving the change-request information, the reception server 15 may verify the requester, based on an input password, fingerprint, etc., so as to determine whether the requester is a proper user.

If the requester clicks on the button "OK" in the page, the user terminal 11 informs the reception server 15 that the requester has clicked on the button. Upon this, the reception server 15 stores the created reproduced image in the database 19 for exhibition.

The user terminal 11 may download the reproduced image data, in a complete form, from the reception server 15, in accordance with the operations of the requester, and print the downloaded image data using a printer. Alternatively, the complete form of the reproduced image data may be printed out by the reception center, and may be provided to the requester afterwards.

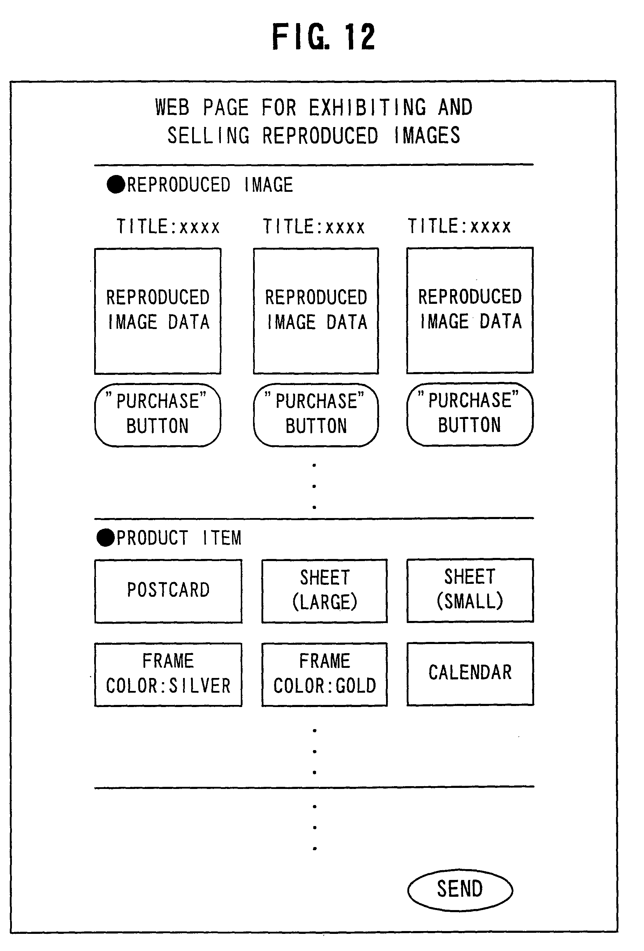

The user terminal 11 accesses a Web page (a Web page for exhibiting and selling reproduced images) through which the reception server 15 exhibits and sells reproduced images, in accordance with operations of a purchaser. The Web page which is sent, in response to the accessing, from the reception server 15 shows a plurality of reproduced images, as illustrated in FIG. 12. This Web pages includes: an area including a plurality of arbitrary reproduced images which are selectable and can be purchased by purchasers; and an area showing a plurality of product items which are related to a reproduced image to be purchased and which can be purchased by purchasers. The plurality of product items include those items, such as "Postcard", "Sheet", "Frame", "Calendar", and the like. If a purchaser wants to get a selected reproduced image printed out on a calendar, he/she selects "Calendar" in the area of product items. If a purchaser wants to purchase a framed reproduced image, he/she selects "Frame" in the area of product items. Various colors and shapes (e.g., various colors of each frame, various sizes of each sheet, calendar, etc.) are prepared for each kind of product item.

For example, in the area of reproduced images, the Web page may include a function for zooming in a particular reproduced image so as to make the size of the image appear bigger when a purchaser selects the reproduced image.

Upon selection of a reproduced image and product item, the user terminal 11 receives purchaser's personal information (the purchaser's name, residential address, phone number, etc.) and payment information (the purchaser's account number, code number of account, etc.). Thereafter, the user terminal 11 sends order information, which includes information representing the selected reproduced image(s) and product item(s), the input personal information and payment information, to the reception server 15.

The work terminal 13 is prepared for the seller (including any workers working for forming reproduced images and products) to create reproduced image data and to make a change in the reproduced image data, and to prepare any products related to the reproduced images. The work terminal 13 includes a computer, including, for example, a controller, a memory, a display section, an input section, a communications section, and the like. The controller executes a program stored in the memory, thereby to realize each function, as will specifically be described below.

The work terminal 13 includes application software for making changes in image data and/or converting the image data into a desired form, for example. The work terminal 13 reads out original image data registered in the database 17 for image formation, in accordance with operations of the seller. The work terminal 13 adjusts and converts color data and size of reproduced image, thereby to create reproduced image data generally conforming to the original image thereof in terms of the coloring and artistic expression thereof. The reproduced image can be created also by converting the original image data into image data in the style of illustration, oil painting, watercolor painting, etc. for example. If the original image is kept by the reception center, the work terminal 13 adjusts and converts the color data and size of the original image data, which is obtained by reading out the original image using an image reader, such as a scanner, digital camera, etc., so as to create reproduced image data.

The work terminal 13 reads out reproduced image data, in which a change is to be made in response to a request from a requester, in accordance with the operation of the seller. The work terminal 13 makes a change in the read image data, and registers the reproduced image data after being changed in the database 17 for image formation.

The work terminal 13 sends, to a predetermined e-mail server, a message for informing the requester about the completion of the image creation and the completion of making the change in the reproduced image data, in accordance with an operation of the seller.

The work terminal 13 reads out reproduced image data corresponding to order information, regarding a product ordered by the purchaser, from the database 17 for image formation, in accordance with the operation of the seller. Then, the work terminal 13 creates reproduced image data corresponding to the ordered product, and prepares the ordered product with the reproduced image.

If the ordered product is a postcard, the work terminal 13 displays an editing page including the frame of a postcard, automatically or in accordance with the operation of the seller. At the same time, the work terminal 13 changes the size of the reproduce image data read out from the database 17 into a postcard size, and attaches the reproduced image data with the changed size into the frame of the displayed postcard, so as to complete the reproduced image data corresponding to the ordered product. Then, the work terminal 13 prints the reproduced image data corresponding to the ordered product, i.e. a postcard, onto a predetermined postcard, thereby preparing the ordered product with the reproduced image (a postcard on which a predetermined reproduced image is printed).

If the product ordered by the purchaser is a calendar or sheet, likewise the case of the postcard, the work terminal 13 attaches the reproduced image data having an optimum size into a predetermined area of the editing page showing the frame of a calendar or sheet, thereby to prepare the reproduced image data corresponding to the ordered product, and prints the prepared reproduced image data corresponding to the ordered product onto a predetermined paper.

If the purchaser orders a frame, the seller puts a predetermined paper on which the reproduced image data with the optimum size is printed, into the ordered frame, so as to form the ordered product.

The seller sends the prepared product to the purchaser by post, at a predetermined timing after the payment is certainly made by the purchaser.

The work terminal 13 sends, to a predetermined e-mail server, a message for informing the requester that the reproduced image data has been used, in accordance with the operation of the seller.

The reception server 15 includes a WWW server, etc., which includes a controller, a memory, a communications section, and the like. The controller included in the reception server 14 executes a program stored in the memory, so as to carry out a process, for receiving a request for creating a reproduced image or an order for a particular product from the user terminal 11.

The reception server 15 provides the user terminal 11 with a Web page (refer to FIG. 10) showing a menu regarding and including actions for a reproduced image(s), in response to a request for accessing the Web page. After this, the reception server 15 carries out a process in accordance with an action selected from the menu.

If the reception server 15 receives a request for creating a reproduced image, it asks the user terminal 11 to input request administration information, which includes the requester's name, residential address, phone number, account number, request contents, etc. Then, the reception server 15 receives input request administration information, and stores the received information in the database 17.

The reception server 15 reads out reproduced image data requested by the requester from the database 17, in response to a request for viewing the reproduced image from the user terminal 11, and provides the user terminal 11 with the read reproduced image data. If the reception server 15 receives a request for making a change in the reproduced image data through the display page (i.e., if the button "Change" has been clicked), the reception server 15 provides the user terminal with a display page, for indicating an arbitrary portion of the reproduced image and including a comment section for inputting a predetermined comment. The reception server 15 receives, from user terminal 11, change-request information, including position information (including reproduced image data including a specified portion) of a portion to be changed in the image data and an input comment, and registers the received change-request information in the database 17.

If the reception server 15 receives a request for settling the reproduced image displayed on the display page (i.e., if the button "OK" has been clicked), the reception server 15 registers the created reproduced image, in its complete form, in the database 19 for exhibition.

The reception server 15 sends a request to a predetermined financial institution for transferring a predetermined amount of money from the requester's account to the seller account, as the payment for the created reproduced image. This is done at a predetermined timing of, for example, receiving request administration information, registering the created (changed) reproduced image data in the database 19, or at any other arbitrary timing.

If the user terminal 11 requests for accessing the Web page for exhibiting and selling reproduced images, the reception server 15 provides the user terminal 11 with the Web page (refer to FIG. 12) for selecting a desired reproduced image and product item. Then, the reception server 15 receives, from the user terminal 11, order information including information regarding a selected reproduced image and product item, personal information of the purchaser, and payment information, and stores the received information in the database 19.

The reception server 15 calculates the charge for the selected reproduced image and product item, upon reception of the order information. The reception server 15 sends a request to a predetermined financial institution for transferring the calculated rates from the purchaser's account to the seller's account.

The reception server 15 sends a request to a predetermined financial institution for transferring a part or the entire amount of money for the purchased product to a bank account of the writer of the original image.

If the reception server 15 receives, for example, the request administration information, change-request information, order information for certain reproduced image data, or the like, the reception server 15 may send a message for informing the work terminal 13 about the reception of such information.

The reception server 15 creates status information for managing the status of each request for creating the reproduced image, and manages the status in association with each request. In this case, the reception server 15 attaches the status information, such as "New Entry", "Completion of Creating Reproduced Image", "Request for Making Change in Reproduced Image", "Completion of Making Change in Reproduced Image", or the like, to the request administration information. This can be done at an arbitrary timing of receiving the request administration information from the user terminal 11 or uploading the reproduced image data to the database 17 from the work terminal 13, or at any other timing. Then, the reception server 15 can manage the progress of each work requested by the requester. Having performed this, the seller can be aware of the contexts of the required work done so far.

The changes may be made in the reproduced image data for free for a predetermined number of times. If the reception server 15 receives the change-requests for the number of times which is larger than a predetermined number, the reception server 15 may inform the seller of it. Upon this, the seller may inform the requester about an addition cost for further change in the form of an email, using the work terminal 13, so that the requester can determine whether to certainly make a change-request based on the estimated additional cost. Alternatively, the reception server 15 may automatically calculate the additional cost which is estimated for further change to be made in the reproduced image, and send the estimated cost to the user terminal 11, so that the requester can determine whether to make a further change in the reproduced image.

The database 17 for image formation stores request administration information, original image data, reproduced image data based on the original image data, in response to a request for creating a particular reproduced image.

The database 19 stores reproduced image data of an image to be exhibited and sold and also order information, in association with each other.

The flow of processes which are carried out by the image formation system according to the second embodiment of the present invention will now specifically be described.

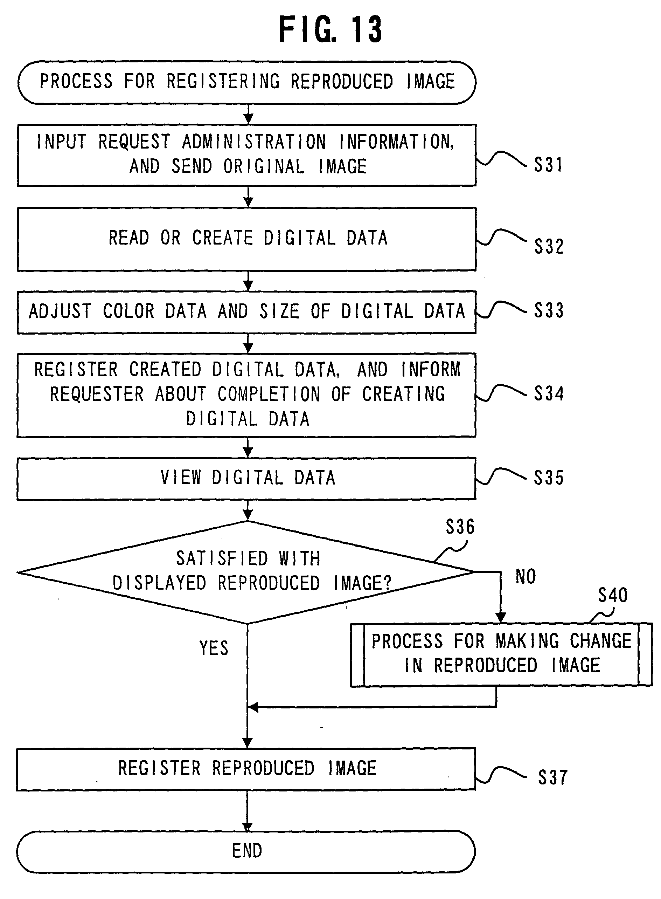

Explanations will now be made to an image-registration process, for creating a reproduced image in response to a request from a requester and registering the created reproduced image in the database 19 for exhibition, with reference to FIG. 13.

Let it be assumed that a requester A is to make a request for creating, exhibiting and selling a reproduced image of a picture image possessed by the requester A. The requester A accesses a Web page, for creating a reproduced image, sent from the reception server 15 of the reception center through the Internet, using the user terminal 11. Then, the requester A inputs request administration information (information including the requester's name, residential address, phone number, etc.) necessary for creating the reproduced image. Thus input information is sent to the reception server 15 from the user terminal 11, and registered in the database 17 for image formation.

After this, the requester A sends an original picture image to the reception center by post. Digital data of the original picture image may be sent from the user terminal 11 to the reception server 15 through the Internet (Step S31).

On the other hand, if the seller receives the picture image from the requester A by post, the seller reads out the received image using an image reader, such as a scanner, digital camera, etc. connected to the work terminal 13, so as to create digital data of the image. If the seller receives the digital data of the original image through the Internet, the seller reads out the data using the work terminal 13 from the database 17 for image formation (Step S32).

Then, the seller adjusts and converts color data and size of the digital data obtained in the step S32, so as to create reproduced image data conforming to the original image in terms of the coloring and artistic expression thereof, and converts the created reproduced image data into an image (reproduced image data) in the style of illustration, oil painting, watercolor painting, etc., using the work terminal 13 (Step S33). This adjusting and converting can be accomplished using existing application software for color matching, application software for making a change in image and for converting image data into a desired form, or the like.

The seller registers the reproduced image data, which is formed in the step S33, in the database 17 for image formation using the work terminal 13. In addition, the seller sends a message for informing the requester A about the completion of the creating of the reproduced image to a predetermined e-mail server (Step S34).

Upon this, the requester A receives the message from the seller, using the user terminal 11. Then, the requester A accesses the reception server 15, and restores (displays) the reproduced image data registered in the database 17 for image formation, using the user terminal 11 (Step S35).

In the case where the requester A is satisfied with the displayed reproduced image, so as to input data showing his/her satisfaction by clicking on the button "OK" on the display page of the user terminal 11, the input data is sent to the reception server 15. Then, the reception server 15 registers the reproduced image in the database 19 for exhibition (Steps S36 and S37).

The reproduced image which is requested by the requester A is thus created, and registered in the database 19 for exhibition. Note that the reproduced image may be sent to the requester A through data communications or by post.

In the step S36, if the requester A makes a request for making a change in the reproduced image so as to click on the button "Change", the flow advances to a process for making a change in the reproduced image (Step S40).

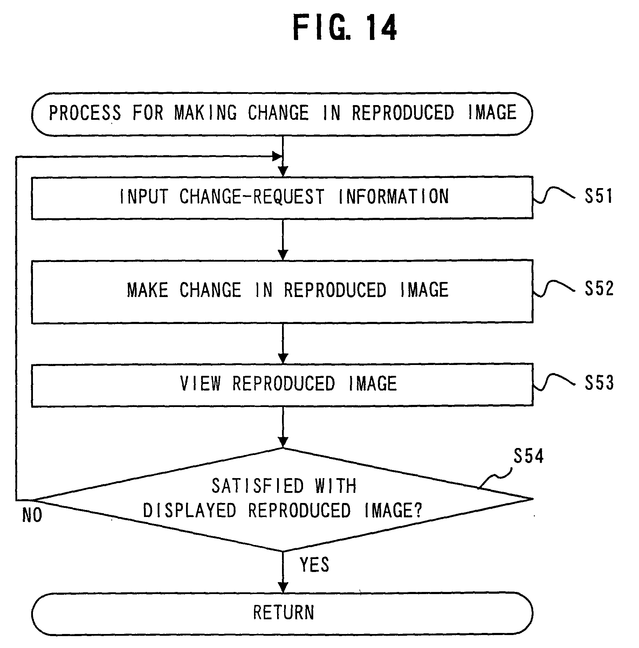

FIG. 14 shows the flowchart of the process for making a change in a reproduced image. In this process, a page for making a change in the reproduced image is displayed on the display section of the user terminal 11. The requester A inputs information regarding the change in the reproduced image, such as a portion to be changed in the reproduced image, change contents, and the like. The reception server 15 receives change-request information input by the requester A, and registers the received information in the database 17 for image formation (Step S51).

The seller makes a change in the reproduced image data based on the change-request information registered in the database 17 for image formation, using the work terminal 13. Upon completion of the change, the seller registers the reproduced image data after being changed in the database 17 for image formation, and sends a message for informing the requester about the completion of making the change in the reproduced image to a predetermined e-mail server (Step S52).

Then, the requester A receives the message from the seller through the user terminal 11, accesses the reception server 15, and displays the reproduced image data registered in the database 17 on the display section of the user terminal 11 (Step S53).

If the requester is satisfied with the displayed reproduced image so as to click on the button "OK" (Step S54), the flow returns to the main-flow of the image-registration process. Then, the reproduced image is registered in the database 19 (Step S37).

In the step S54, if the requester sends a request for making a further change in the reproduced image, the flow returns to the step S51, and the procedures of steps S51 to S54 are repeated, until the requester A clicks on the button "OK".

The changes in the reproduced image may be made for free for a predetermined number of times. In this case, if the change-requests are transmitted for a number of times more than a predetermined number of time, the seller sends a message for informing the requester about the estimated additional cost for a further change. A step for asking the requester whether to wish to make a further change in the reproduced image may be inserted after the step S51 and before the step S52. Alternatively, the reception server 15 may inform the requester A about the estimated additional cost for a further change, automatically in accordance with a predetermined equation.

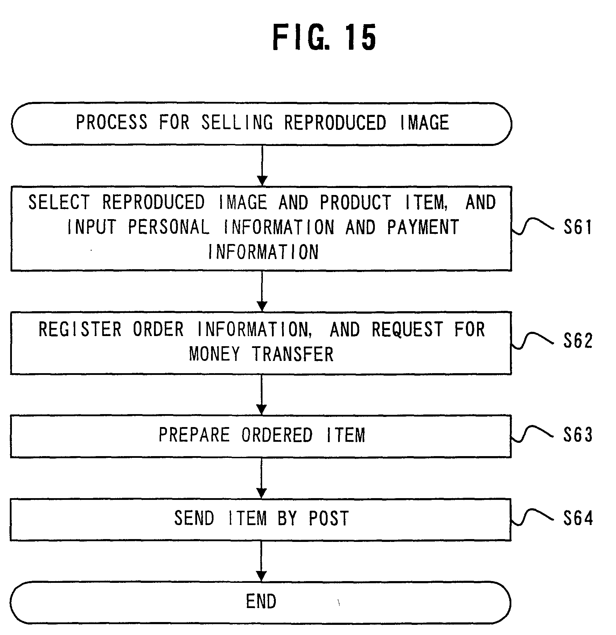

Explanations will now be made to a process for selling a reproduced images registered in the database 19 for exhibition in the reception center, with reference to FIG. 15.

For example, a purchaser B accesses a Web page, for exhibiting and selling reproduced images, sent from the reception server 15 of the reception center, from the user terminal 11 through the Internet. Then, the purchaser B selects a desired reproduced image and product item, in the Web page sent from the reception server 15. Let it be assumed that the purchaser B has selected the product item of "Calendar". The purchaser B inputs his/her personal information and payment information necessary for paying the money for a given service (Step S61). Thus input information is sent from the user terminal 11 to the reception server 15.

The reception server 15 registers order information received from the user terminal 11 in the database 19, and sends a request for transferring the charged money from the purchaser B's account to the seller's account, to a predetermined financial institution (Step S62). This realizes, in the predetermined financial institution, the money transfer from the purchaser's account to the seller's account.

The seller refers to the order information registered in the database 19, using the work terminal 13. The seller reads out corresponding reproduced image data from the database 19, and prepares a product item specified by the purchaser B (Step S63). In this embodiment, because "Calendar" has been selected by the purchaser, the seller retrieves an editing page for editing "Calendar" using the work terminal 13. At the same time, the seller reads out specified reproduced image data from the database 19, adjusts the read data in the form of a calendar, attaches the adjusted data into the frame of the target calendar which is displayed on the display section of the user terminal 11, and prints the calendar with the attached data on a predetermined paper.

After the money transfer is successfully made in the step S62, the seller sends the product item (the calendar) to the purchaser B by post, etc. (Step S64).

Accordingly, upon the request from the requester, the reception server 15 creates the desired reproduced image, and exhibits and sells the created reproduced image on the network. In this structure, the work of the requester is shown to any third party on the Internet, etc. Further, any product item on which a selected image is printed out may be purchased by the third party. Since only the ordered product item is created and sold, the requester needs not prepare the product items in stock.

The image to be exhibited/sold is not limited to the reproduced image data which has been created using the work terminal 13. For example, such an image may include image data of an original image (painting, picture, or the like) which has been received from the requester. Further, there may be prepared a Web page for exhibiting/selling original images, and providing the service for exhibiting/selling the original image, likewise the above. There may be prepared also a Web page for exhibiting/selling original images, together with reproduced images.

The system of this invention may be adapted for a system which creates reproduced image data upon a request from the requester, exhibits the reproduced image data. The system of this invention may also be adapted for a system which receives an original image, and exhibits digital data of the original image. In such a case, in response to the external access, the reception server 15 provides a requester with a Web page including any image data (such as reproduced image data, read data of original image) registered in the database 19.

The purchaser may receive an image showing an ordered item, so that he/she can check the appearance of the ordered item. In this case, the seller photographs the prepared item using an image reader, such as a digital camera, etc., and provides the purchaser with data of the photographed image. The photographed image may be uploaded into the database 19 so as to be accessed by the purchaser, or may be sent to the purchaser. In this structure, the purchaser can ascertain the outside appearance of the ordered item, by viewing the received image data. Then, the account may be settled, only after a message representing that the purchaser has checked the ordered item is transmitted.

The request for making a change in the reproduced image data may be transmitted only from the purchaser having viewed the image of the product item. For example, the purchaser may send a request for making a change in the color of the frame, containing a reproduced image, or in the size of the image printed on a postcard, etc., or in the product item to be purchased (e.g., if the purchaser wants to change "Postcard" to "Calendar"). The user terminal 11 displays the page for receiving an input request for making a change in the reproduced image, and sends the received request to the reception server 15. Then, the seller sees the sent request obtained by the reception server 15, so as to remake the product.

In the case where the cost for a certain service should be changed, the newly estimated cost is provided to the purchaser, and asks the purchaser whether to still make a change. In this case, the seller calculates the estimated cost, and sends the estimated cost to the purchaser in the form of an e-mail. Otherwise, the reception server 15 may automatically calculate the estimated cost and show the estimated cost to the purchaser.

The reproduced image data which has been exhibited on the network may be purchased by the purchaser, through data communications. In this case, the purchaser selects a desired reproduced image among the exhibited reproduced images, using the work terminal 13, so as to download image data corresponding to the selected image from the reception server 15. Then, the purchaser outputs the received reproduced image data using a printer, etc.

Before receiving a request for creating a reproduced image, each requester may be registered in advance. In this case, the following request(s) for creating the reproduced image can easily be accomplished only by inputting some information, like the requester's name, password, etc.

Before receiving a request for purchasing a reproduced image, each purchaser may be registered in advance. In this case, the following request(s) for purchasing the reproduced image can easily be accomplished only by inputting some information, like the purchaser's name, password, etc.

The product items which have been described are employed only by way of example. Any other product items may be employed.

The method for preparing the product item using the work terminal 13 has been employed in this specification only by way of example. The product item may be prepared using any other applicable methods.

In the case where to sell a reproduced image, the purchaser/requester may be verified, based on an input password, finger print, etc., so as to make sure whether the purchaser/requester is a proper user.

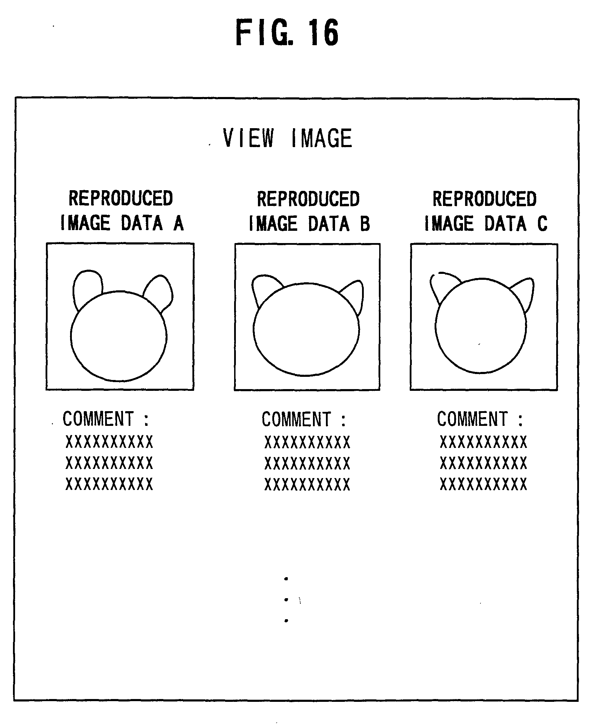

In the systems according to the first and second embodiments of the present invention, when the requester (customer) is to check (view) the reproduced image including the change made thereinside, the user terminal 1 and 11 may receive a display page, for displaying a plurality of reproduced images without or with a change made thereinside, from the reception servers 5 and 15, and may display the received page on the display section thereof. This display page may include, as illustrated in FIG. 16, comments representing the seller's intention to make a change in each of the reproduced images, in association with the reproduced images. Having performed the above, the requester can be aware of the seller's intention to make a change in the image (e.g. any changes made in the shape, coloring, etc.) in the reproduced images. Therefore, the systems of the present invention can satisfy the needs of both types of customers, one type of customers who may select a painting at first sight, and the other type of customers who have deep knowledge about the paintings.

The payment method is not limited to the money transfer, and any other methods may be employed. For example, the money for the provided service(s) may be electronically transferred using a debit card, electronic money (E-money). Additionally, the payable money may be transferred from an ATM terminal or the like to the seller's account.

The network, to which the user terminal 11, work terminal 13, and reception server 15 are connected, is not limited to the Internet, and any other networks are applicable.

The digital data which is created in the system of this embodiment is not limited to data of the reproduced image data, and may represent various artistic digital images which can be created based on a request from the requester.

The system of this invention can be realized using a general-purpose computer, without the use of a dedicated system. For example, the above-described process can be executed in accordance with a program installed into a computer from a computer readable recording medium (such as a floppy disk, CD-ROM, DVD, etc.), thereby to realize the functions of the user terminal 1, work terminal 3, reception server 5, user terminal 11, work terminal 13, reception server 15, etc. The program for executing the above processes may be stored in a disk device included in the server device on a network, such as the Internet, etc., and embedded in a carrier wave, so as to be downloaded into a computer.

The processes to be executed in accordance with the program may be realized by a OS (Operating System) independently or in combination with application software. In this case, the program, except the OS part, may be stored on a recording medium, and embedded in a carrier wave so as to be downloaded into a computer, etc.

Various embodiments and changes may be made thereonto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

This application is based on Japanese Patent Applications Nos. 2000-155865 and 2000-155866 both filed on May 26, 2000, and including specification, claims, drawings and summary. The disclosure of the above Japanese Patent Applications is incorporated herein by reference in its entirety.

## Claims

1. An image formation method which is executed by a computer (3, 5), said method **characterized by** comprising the steps of:
receiving a formation request for forming a first digital image through a network from a requester, and storing the formation request;
forming the first digital image based on digital data of an original image, and storing the formed first digital image, in accordance with an operation of a request receiver, in response to the formation request;
sending a message addressed to the requester and representing that the first digital image has completely been formed;
reading the first digital image, and providing the requester with the read first digital image, in response to a request from the requester; and
executing a payment process for receiving payment for the provided first digital image from the requester.

2. The image formation method according to claim 1, further **characterized by** comprising the steps of:
providing the requester with the formed first digital image through a network, so that the requester can view the first digital image;
receiving a change request for making a change in the first digital image through a network, and storing the change request;
forming at least one second digital image, by making the change in the first digital image in response to the change request, and storing the at least one second digital image, in accordance with an operation of the request receiver, and providing the requester with image data representing the at least one second digital image, so that the requester checks the at least one digital image based on the provided image data;
providing the requester with the at least one second digital image, in response to a request from the requester; and
executing a payment process for receiving payment for the provided at least one second digital image from the requester.

3. The image formation method according to claim 2, **characterized in that**:
said step of forming the at least one second digital image includes a step of making a change in the at least one second digital image, in response to a request from the requester.

4. The image formation method according to claim 3, **characterized by** further comprising the step of
executing a process for receiving payment for the change made in the first digital image and/or the at least one second digital image, from the requester, in a case where total number of changes made in the first digital image and/or the at least one second digital image is equal to or larger than a predetermined number.

5. The image formation method according to claim 4, **characterized by** comprising the step of
providing the requester with a message representing a charge for making the change in the first digital image and/or the at least one second digital image, and asking the requester whether to still make a change in the first digital image and/or at least one second digital image, through a network.

6. The image formation method according to claim 1, **characterized in that** the digital data of the original image is retrieved by performing at least one of the step of:
reading the original image sent from the requester, using an image reader; and
receiving the digital data of the original image from a terminal (1) of the requester through a network.

7. The image formation method according to claim 1, **characterized in that** said step of providing the requester with the formed first digital image includes at least one of the steps of:
providing the terminal (1) of the requester with the first digital image to be displayed, through a network; and
printing the first digital image, and providing the requester with the printed digital image.

8. The image formation method according to claim 3, **characterized in that** the first digital image and the at least one second digital image are sent to the requester, thereby the requester selects one of the first digital image and the at least one second digital image.

9. The image formation method according to claim 8, **characterized in that** any one of the first digital image and the at least one second digital image which has not been selected by the requester is deleted.

10. A method for exhibiting and selling an image, which is executed by a computer (13, 15), said method **characterized by** comprising the steps of:
receiving a formation request for forming a digital image through a network, and storing the received formation request;
forming the digital image based on digital data of an original image, in accordance with an operation of a request receiver, in response to the formation request, and storing the digital image;
providing the stored digital image, in response to a request for the formed digital image, which is to be displayed;
receiving a purchase request for purchasing a product related to the digital image from a purchase requester, and storing the purchase request;
executing a process for forming the product to be provided to the purchase requester, using the digital image, in accordance with an operation of a request receiver, in response to the purchase request; and
executing a payment process for receiving payment for the formed product from the purchase requester.

11. The method according to claim 10, **characterized by** further comprising:
said step of receiving the purchase request for purchasing the product includes a step of receiving information representing the digital image and the product requested by the purchase requester; and
said process for forming the product includes a step of printing the digital image in such a way that the digital image corresponds to the product requested by the purchase requester, in response to the purchase request.

12. A server (5) prepared for said image formation system connectable to a network and a database (7), and **characterized in that**:
receives a formation request for forming a digital image from a requester through a network, and registers the formation request in said database;
provides the requester with the digital image which is formed based on digital data of an original image, in response to a request for the digital image; and
executes a payment process for receiving payment for the provided digital image, from the requester.

13. The server according to claim 12, **characterized in that** said server:
reads the digital image from said database (7) in response to a request from a terminal (1) of the requester, and provides the terminal with a display page for displaying the digital image;
receives a change request for making a change in the digital image displayed in the display page, and registers the change request in the database (7); and
provides the requester with the digital image in which the change has been made based on the change request.

14. A server prepared for an image exhibition/sales system connectable to a network and a first and second databases (17, 19), and **characterized in that** said server:
receives a formation request for forming a digital image through a network, and registers the received formation request in said first database (17);
sends the digital image which is formed based on digital data of an original image in response to the formation request and registered in said database (19), in response to a request for the digital image which is to be displayed;
receives a purchase request, from a purchase requester, for purchasing a product related to the digital image, and registers the purchase request in said second database (19); and
executes a payment process for receiving payment for the product from the purchase requester.

15. The server according to claim 14, **characterized in that** said server receives information representing the digital image and the product requested by the requester, and registers the received information in said second database (19), while receiving the purchase request for purchasing the product.

16. A work terminal (3) prepared for said image formation system which is connectable to a network and a database (7), and **characterized in that** said work terminal:
forms a digital image based on digital data of an original image, in accordance with an operation of a request receiver, in response to a formation request, for forming the digital image, which is registered in said database (7); and
registers the formed digital image in said database (7).

17. The work terminal according to claim 16, **characterized in that** said work terminal:
makes a change in the digital image, in accordance with an operation of the request receiver, in response to a change request registered in said database (7); and
registers the digital image in which the change is made in said database.

18. The work terminal according to claim 16, **characterized in that** the digital data is obtained by performing at least one of the steps of:
reading the original image sent from the requester, using an image reader; and
reading digital data of the original image which is registered in said database.

19. A work terminal (13) prepared for image exhibition/sales system connectable to a network and a first and second databases (17, 19), and **characterized in that** said work terminal:
forms a digital image based on digital data of an original image, in accordance with an operation of a request receiver, in response to a formation request for forming the digital image which request is registered in said first database (17), and registers the formed digital image in said second database (19); and
executes a process for forming a product to be supplied to a purchase requester, in such a way that the product corresponds to the digital image, in accordance with an operation of the request receiver, in response to a purchase request for purchasing the product related to the digital image registered in said second database (19).

20. The work terminal according to claim 19, **characterized in that**:
the purchase request for purchasing the product formed to correspond to the digital image registered in said second database (19) represents the digital image and product requested by the purchase requester; and
said work terminal prints the requested digital image during the process for forming the product, in response to the purchase request, in such a way that the digital image corresponds to the requested product.

21. A computer readable recording medium which records a program for controlling a computer to execute the steps of:
receiving a formation request for forming a digital image from a requester through a network, and registering the received formation request in a database (7);
providing the requester with the digital image which is formed based on digital data of an original image in response to the formation request; and
executing a process for receiving payment for the provided digital image from the requester.

22. A computer readable recording medium which records a program for controlling a computer to execute the steps of:
receiving a formation request for forming a digital image through a network, and registering the formation request in a first database (17);
providing, in response to a request from a purchaser requester, a digital image which is to be displayed and which is formed based on digital data of an original image in response to the formation request and registered in a second database (19);
receiving a purchase request for purchasing a product related to the formed digital image from the purchase requester, and registering the received purchase request in said second database (19); and
executing a process for receiving payment for the product from the purchase requester.

23. A computer data signal which is embodied in a carrier wave, said signal **characterized by** comprising:
a segment for receiving a formation request for forming a digital image from a requester through a network, and registering the formation request in a database (7);
a segment for providing the requester with the digital image which is formed based on digital data of an original image, in response to the formation request; and
a segment for executing a process for receiving payment for the provided digital image from the requester.

24. A computer data signal which is embodied in a carrier wave, said signal **characterized by** comprising:
a segment for receiving a formation request for forming a digital image through a network, and registering the formation request in a first database (17);
a segment for displaying, in response to a request, the digital image which is formed based on digital data of an original image in response to the formation request and registered in a second database (19);
a segment for receiving a purchase request for purchasing a product related to the digital image from a purchase requester, and registering the purchase request in said second database (19); and
a segment for executing a process for receiving payment for the product from the purchase requester.
